# EUROPÄISCHE PATENTSCHRIFT

(11) **EP 1 906 156 B1**
(45) Veröffentlichungstag und Bekanntmachung des Hinweises auf die Patenterteilung: **02.05.2018**
(21) Anmeldenummer: 07018686.1
(22) Anmeldetag: 24.09.2007
(51) Int. Cl.: G01F 1/58, G01F 15/00

(54) **Durchflussmessgerät**
Flow measuring device
Appareil de mesure de débit

(30) Priorität: 27.09.2006 DE 102006045976
(43) Veröffentlichungstag der Anmeldung: 02.04.2008
(73) Patentinhaber: Krohne AG, 4019 Basel (CH)
(72) Erfinder: Detlef, Jacobi, 77830 Bühlertal (CH); Udo, Stevens, 47802 Krefeld (CH); Neuburger, Stefan, 55271 Stadecken-Elsheim (CH)
(74) Vertreter: Gesthuysen Patent- und Rechtsanwälte

(56) Entgegenhaltungen:
- EP-A- 1 586 533
- EP-A1- 0 110 189
- EP-A2- 0 200 563
- WO-A-00/50793
- DE-A1- 2 330 593
- DE-A1- 19 913 685
- DE-A1-102004 028 576
- FR-A- 2 487 944
- US-A1- 2005 256 428
- US-B1- 6 321 766

## Beschreibung

Die Erfindung betrifft ein magnetisch-induktives Durchflußmeßgerät, mit einem Meßrohr zum Führen des Mediums und einer im Bereich des Meßrohrs angeordneten Durchflußmeßeinrichtung.

Durchflußmeßgeräte, wie magnetisch-induktive Durchflußmeßgeräte, sind schon seit langer Zeit gut bekannt und werden vielfältig in unterschiedlichen Einsatzgebieten verwendet. Insbesondere magnetisch-induktive Durchflußmeßgeräte werden dabei auch bei der volumetrischen Abfüllung und Dosierung eingesetzt. Das heißt, daß magnetisch-induktive Durchflußmeßgeräte für Abfüllmaschinen verwendet werden, mit denen flüssige Lebensmittel, wie Getränke, in Behältnisse, z. B. Flaschen, abgefüllt werden.

Das grundlegende Prinzip eines magnetisch-induktiven Durchflußmeßgeräts für strömende Medien geht bereits auf Faraday zurück, der im Jahre 1832 vorgeschlagen hat, das Prinzip der elektromagnetischen Induktion zur Strömungsgeschwindigkeitsmessung anzuwenden. Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetspule ein Magnetfeld erzeugt wird, das eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung und der über den Querschnitt des Meßrohrs gemittelten Strömungsgeschwindigkeit des Mediums, d. h. zwischen Meßspannung und Volumenstrom.

Wenigstens im Bereich der Meßelektroden ist es erforderlich, daß der Innenbereich des Meßrohrs elektrisch isolierend ist oder eine elektrisch isolierende Auskleidung aufweist. Insbesondere kann dazu vorgesehen sein, daß das Meßrohr aus einer Keramik hergestellt ist, in die die Meßelektroden z. B. eingesintert sind.

Bei der Verwendung eines magnetisch-induktiven Durchflußmeßgeräts für eine Abfüllmäschine, die zum Abfüllen von flüssigen Lebensmitteln dient, sind zwei Anforderungen von wesentlicher Bedeutung: Erstens muß den hygienischen Ansprüchen entsprochen werden, was bedeutet, daß die Leitungen und Anschlüsse sowie die Übergänge zwischen einzelnen Bauteilen hygienischen Standards entsprechen müssen. Zweitens muß ein für eine Abfüllmäschine vorgesehenes magnetisch-induktives Durchflußmeßgerät hinreichend kleinbauend sein, damit die Abfüllmaschine auf platzsparende Weise mit einer Vielzahl derartiger magnetisch-induktiver Durchflußmeßgeräte ausgestattet werden kann DE102004028576, EP1586533 oder EP0110189 offenbaren jeweils ein magnetisch-induktives Durchflussmessgerät nach dem Obergriff von Anspruch 1.

Vor diesem Hintergrund ist es die Aufgabe der Erfindung, ein magnetisch-induktives Durchflussmessgerät gemäß des Anspruchs 1, anzugeben, das kompakt ist und auf einfache Weise den für Abfüllmaschinen geltenden Hygienestandards entsprechen kann.

Ausgehend von dem eingangs beschriebenen Durchflußmeßgerät ist diese Aufgabe dadurch gelöst, daß ein Ventilgehäuse vorgesehen ist, das einstückig mit dem Meßrohr ausgebildet ist.

Maßgeblicher Bestandteil einer Abfüllmaschine ist in der Regel immer ein Ventil, das derart angesteuert wird, daß genau eine vorbestimmte, durch ein Durchflußmeßgerät ermittelte Menge des abzufüllenden Mediums in ein Behältnis abgefüllt wird. Erfindungsgemäß ist in diesem Zusammenhang nun vorgesehen, daß das Meßrohr des Durchflußmeßgeräts bereits in einstückiger Weise mit einem Ventilgehäuse versehen ist, so daß das Meßrohr mit dem Ventil eine gemeinsame Baueinheit bildet. Auf diese Weise wird eine kompakte Konstruktion bereitgestellt, die platzsparend und einfach handhabbar ist, wobei aufgrund einer fehlenden Übergangsfläche vom Meßrohr auf das Ventilgehäuse auch unter hygienischen Gesichtspunkten eine einfache Handhabung gewährleistet wird.

Grundsätzlich gibt es eine Mehrzahl von Möglichkeiten, das Ventilgehäuse und das Meßrohr einstückig miteinander auszugestalten. Gemäß einer bevorzugten Weiterbildung der Erfindung ist jedoch vorgesehen, daß das Ventilgehäuse einstückig an das Meßrohr angefügt ist, z. B. angegossen ist. Gemäß einer alternativen bevorzugten Ausführungsform der Erfindung ist vorgesehen, daß das Ventilgehäuse und das Meßrohr aus einem gemeinsamen Werkstück hergestellt sind. Gemäß der Erfindung, die insbesondere für ein magnetisch-induktives Durchflußmeßgerät geeignet ist, ist vorgesehen, daß das Meßrohr und das Ventilgehäuse aus Keramik hergestellt sind, insbesondere nämlich aus einem einzigen gemeinsamen Keramikwerkstück.

Sind das Meßrohr und das Ventilgehäuse aus Keramik hergestellt, so ist gemäß der Erfindung vorgesehen, daß in dem Ventilgehäuse ein bewegbarer Ventilkörper angeordnet ist, der ebenfalls aus Keramik hergestellt ist, insbesondere nämlich vorzugsweise aus der gleichen Keramik wie das Ventilgehäuse und damit das Meßrohr. Dabei ist gemäß der Erfindung ferner vorgesehen, daß zwischen dem Ventilgehäuse und dem Ventilkörper keine separate Dichtung bereitgestellt wird. Vielmehr liegen die beiden Keramikflächen des Ventilgehäuses einerseits und des Ventilkörpers andererseits direkt aufeinander auf, wobei aufgrund ihrer erzielbaren extremen Glattheit bereits ohne separate Dichtung eine hinreichende Dichtwirkung erzielt wird.

Bezüglich der Anordnung des Ventilgehäuses gibt es mehrere Möglichkeiten. Gemäß der Erfindung ist jedoch vorgesehen, daß das Ventilgehäuse in Strömungsrichtung gesehen hinter der Durchflußmeßeinrichtung angeordnet ist.

Nachfolgend wird die Erfindung anhand bevorzugter Ausführungsbeispiele unter Bezugnahme auf die Zeichnung weiter im Detail erläutert. In der Zeichnung zeigt
- Fig. 1: ein magnetisch-induktives Durchflußmeßgerät gemäß einem ersten bevorzugten Ausführungsbeispiel der Erfindung, teilweise im Schnitt,
- Fig. 2: ein magnetisch-induktives Durchflußmeßgerät gemäß einem zweiten bevorzugten Ausführungsbeispiel der Erfindung, teilweise im Schnitt, und
- Fig. 3: ein magnetisch-induktives Durchflußmeßgerät gemäß einem dritten bevorzugten Ausführungsbeispiel der Erfindung, ebenfalls teilweise im Schnitt.

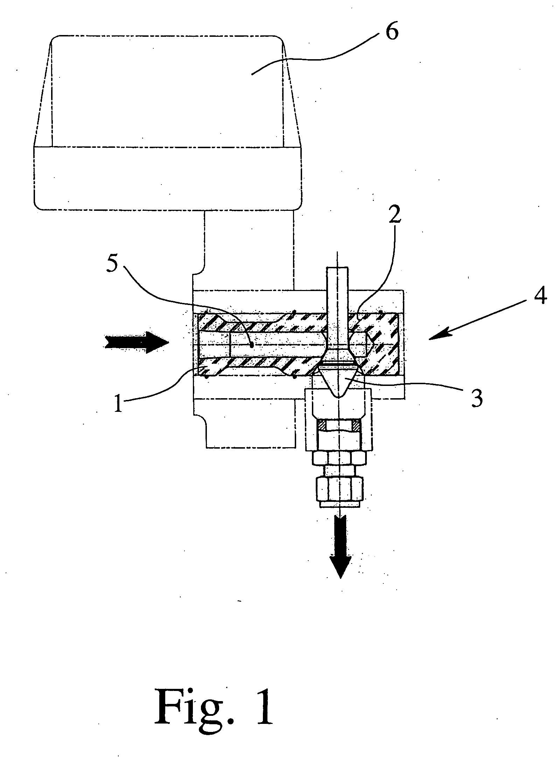

Das aus Fig. 1 ersichtliche magnetisch-induktive Durchflußmeßgerät gemäß einem ersten bevorzugten Ausführungsbeispiel der Erfindung weist ein keramisches Meßrohr 1 auf, das an seinem rechten Ende in einstückiger Weise mit einem Ventilgehäuse 2 versehen ist. In dem Ventilgehäuse 2 ist ein bewegbarer Ventilkörper 3 vorgesehen, der derart angesteuert werden kann, daß das durch das Ventilgehäuse 2 und den Ventilkörper 3 gebildete Ventil 4 geöffnet oder geschlossen wird. Das Meßrohr 1 und das Ventilgehäuse 2 sind aus einem gemeinsamen Werkstück aus Keramik hergestellt, so daß eine einstückige Konstruktion erzielt wird, bei der das Meßrohr 1 nahtlos auf das Ventilgehäuse 2 übergeht.

Als Bestandteil einer im Bereich des Meßrohrs 1 angeordneten Durchflußmeßeinrichtung sind Meßelektroden 5 vorgesehen, die in das Meßrohr 1 eingesintert sind und bis in das Innere des Meßrohrs 1 hineinreichen, so daß sie mit dem durch das Meßrohr 1 strömenden Medium in galvanisch leitenden Kontakt kommen können. Wie durch die dicken Pfeile für die Strömungsrichtung angedeutet, ist das Ventil 4 damit in Strömungsrichtung gesehen hinter der Durchflußmeßeinrichtung angeordnet.

Das über die Meßelektroden 5 abgegriffene Meßsignal, nämlich die in dem strömenden Medium induzierte Spannung, wird der im einzelnen nicht dargestellten Meßelektronik 6 zugeführt, die entsprechend den eingestellten Vorgabewerten für die abzufüllenden Volumina des strömenden Mediums das Ventil 4 ansteuert.

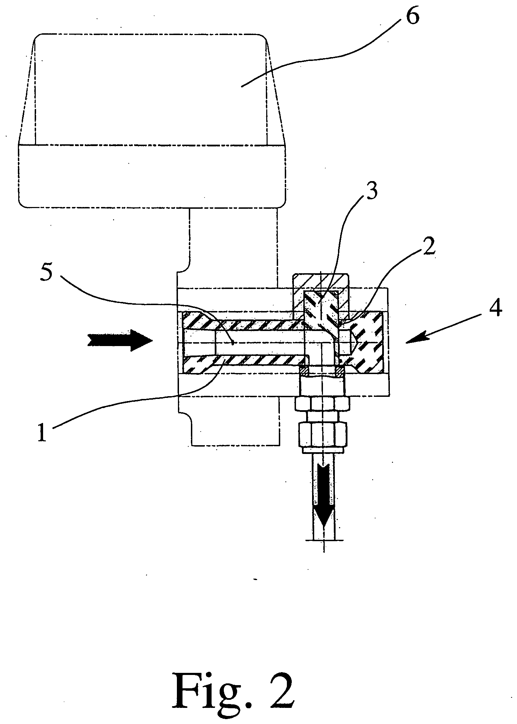

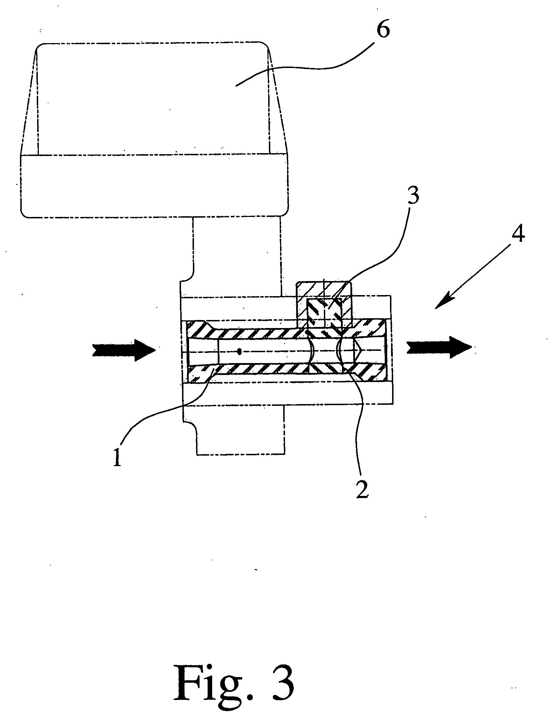

Bei dem vorliegend beschriebenen ersten bevorzugten Ausführungsbeispiel der Erfindung ist vorgesehen, daß die Flußrichtung durch das Meßrohr 1 waagerecht ist und daß das Medium nach Erfassung seines Durchflusses über das Ventil 4 rechtwinklig dazu, nämlich nach unten, zum Abfüllen abgegeben wird. Entsprechendes ist auch bei dem in Fig. 2 gezeigten magnetisch-induktiven Durchflußmeßgerät gemäß einem zweiten bevorzugten Ausführungsbeispiel der Erfindung vorgesehen, wobei jedoch bei dem ersten bevorzugten Ausführungsbeispiel der Erfindung als Ventilkörper 3 ein derartiger Körper vorgesehen ist, der in Abgaberichtung des Ventils und entgegengesetzt dazu bewegbar ist, während bei dem zweiten bevorzugten Ausführungsbeispiel der Erfindung ein drehbarer Ventilkörper 3 vorgesehen ist. Ein derartiger drehbarer Ventilkörper 3 kann, wie bei dem aus Fig. 3 ersichtlichen dritten bevorzugten Ausführungsbeispiel der Erfindung ersichtlich, auch derart ausgebildet sein, daß der Auslaß über das Ventil 4 in der Richtung erfolgt, die der Durchströmrichtung durch das Meßrohr 1 entspricht.

## Patentansprüche

1. Magnetisch-induktives Durchflussmessgerät zur Durchflussmessung eines strömenden Mediums, mit einem Messrohr (1) zum Führen des Mediums und einer im Bereich des Messrohrs (1) vorgesehenen Durchflussmesseinrichtung (6), wobei ein Ventilgehäuse (2) in Strömungsrichtung gesehen hinter der Durchflussmesseinrichtung (6) vorgesehen ist, wobei das Messrohr (1) und das Ventilgehäuse (2) aus Keramik hergestellt sind und wobei in dem Ventilgehäuse (2) ein bewegbarer Ventilkörper (3) vorgesehen ist, der ebenfalls aus Keramik hergestellt ist,
**dadurch gekennzeichnet,**
**dass** das Ventilgehäuse (2) einstückig mit dem Messrohr (1) ausgebildet ist und dass zwischen dem Ventilgehäuse (2) und dem Ventilkörper (3) keine separate Dichtung vorgesehen ist.

2. Durchflussmessgerät nach Anspruch 1, **dadurch gekennzeichnet, dass** das Ventilgehäuse (2) einstückig an das Messrohr (1) angefügt ist.

3. Durchflussmessgerät nach Anspruch 1, **dadurch gekennzeichnet, dass** das Ventilgehäuse (2) und das Messrohr (1) aus einem gemeinsamen Werkstück hergestellt sind.

4. Durchflussmessgerät nach einem der Ansprüche 1 bis 3, **dadurch gekennzeichnet, dass** die Durchflussmesseinrichtung ein in dem Messrohr (1) vorgesehenes Paar von Messelektroden (5) aufweist.

## Claims

1. A magnetic-inductive flowmeter for measuring the flow rate of a flowing medium, comprising a measuring tube (1) for guiding the medium and a flow-measuring device (6) provided in the area of the measuring tube (1), wherein a valve housing (2) is provided downstream from the flow-measuring device (6) as viewed in the flow direction, wherein the measuring tube (1) and the valve housing (2) are of a ceramic material, and wherein a movable valve member (3) is provided in the valve housing (2), which is also made of a ceramic material,
**characterized in**
**that** the valve housing (2) is made as one piece with the measuring tube (1) and that no separate gasket is provided between the valve housing (2) and the valve member (3).

2. Flowmeter according to claim 1, **characterized in that** the valve housing (2) is attached to the measuring tube (1) as one piece.

3. Flowmeter according to claim 1, **characterized in that** the valve housing (2) and the measuring tube (1) are made from one common workpiece.

4. Flowmeter according to any one of claims 1 to 3, **characterized in that** the flow-measuring device (6) includes a pair of measuring electrodes (5) positioned within the measuring tube (1).

## Revendications

1. Appareil de mesure de débit magnétique-inductif pour mesurer le débit d'un écoulement de fluide, comprenant un tube de mesure (1) pour guider le fluide et un dispositif de mesure de débit (6) prévu dans la région du tube de mesure (1), un boîtier de soupape (2) étant prévu derrière le dispositif de mesure de débit (6), vu dans le sens de l'écoulement, le tube de mesure (1) et le boîtier de soupape (2) étant fabriqués en céramique et un corps de soupape mobile (3) étant prévu dans le boîtier de soupape (2), lequel est également fabriqué en céramique,
**caractérisé en ce que**
le boîtier de soupape (2) est réalisé d'une seule pièce avec le tube de mesure (1) et **en ce qu'**entre le boîtier de soupape (2) et le corps de soupape (3) n'est prévu aucun joint d'étanchéité séparé.

2. Appareil de mesure de débit selon la revendication 1, **caractérisé en ce que** le boîtier de soupape (2) est assemblé d'une seule pièce au tube de mesure (1).

3. Appareil de mesure de débit selon la revendication 1, **caractérisé en ce que** le boîtier de soupape (2) et le tube de mesure (1) sont fabriqués à partir d'une seule pièce.

4. Appareil de mesure de débit selon l'une quelconque des revendications 1 à 3, **caractérisé en ce que** le dispositif de mesure de débit présente une paire d'électrodes de mesure (5) prévues dans le tube de mesure (1).
